## Europäisches Patentamt
## European Patent Office
## Office européen des brevets

(19)

(11) Veröffentlichungsnummer : **0 117 880 B2**

# (12) NEUE EUROPÄISCHE PATENTSCHRIFT

(45) Veröffentlichungstag der neuen Patentschrift :
**18.12.91 Patentblatt 91/51**

(51) Int. Cl.⁵ : **A47J 31/50, H05B 3/14, A47J 31/057, H05B 3/68**

(21) Anmeldenummer : **83102018.5**

(22) Anmeldetag : **02.03.83**

(54) **Elektrische Heizeinrichtung.**

(43) Veröffentlichungstag der Anmeldung :
**12.09.84 Patentblatt 84/37**

(45) Bekanntmachung des Hinweises auf die
Patenterteilung :
**23.07.86 Patentblatt 86/30**

(45) Bekanntmachung des Hinweises auf die
Entscheidung über den Einspruch :
**18.12.91 Patentblatt 91/51**

(84) Benannte Vertragsstaaten :
**AT CH DE FR GB IT LI**

(56) Entgegenhaltungen :
**EP-A- 0 061 848**
**DE-A- 2 525 156**
**DE-A- 2 610 043**
**DE-A- 2 614 433**
**DE-A- 3 138 703**
**DE-B- 1 286 242**
**DE-B- 2 805 427**
**DE-C- 711 883**
**DE-C- 1 646 987**
**DE-C- 1 690 621**

(56) Entgegenhaltungen :
**FR-A- 388 958**
**FR-A- 585 090**
**FR-A- 887 132**
**US-A- 2 767 295**
**US-A- 3 619 703**
**US-A- 3 720 807**
**US-A- 3 748 439**
**US-A- 3 976 854**
**US-A- 3 987 772**
**US-A- 3 995 141**
**US-A- 3 996 447**
**ZS IEEE Transaction on Ind. Appl. Vol. I.A-8,
No.3, May/June 1972 (ergänzt R 6)**
**ZS Philips Techn. Rundschau 30 (1969), S. 192
bis 200**

(73) Patentinhaber : **ELPAG AG CHUR**
**Quaderstrasse 11**
**CH-7001 Chur (CH)**

(72) Erfinder : **Bleckmann, Ingo, Dipl.-Ing. Dr.**
**Ignaz-Rieder-Kai 1**
**A-5020 Salzburg (AT)**

(74) Vertreter : **Liedl, Gerhard**
**Steinsdorfstrasse 21 - 22**
**W-8000 München 22 (DE)**

**EP 0 117 880 B2**

## Beschreibung

Die Erfindung betrifft eine elektrisch beheizbare Warmhalteplatte für Kaffeemaschinen nach dem Oberbegriff des Patentanspruches 1.

Aus der DE-A-2 614 433 ist ein selbstregelndes Heizelement bekannt geworden, das als Wärmequelle mindestens einen scheibenartigen Widerstandskörper aus einem Material mit einem positiven Temperaturkoeffizienten des elektrischen Widerstandes enthält, der zwischen Metallkörpern liegt. Die Metallkörper befinden sich auf der von dem Widerstandskörper abgekehrten Seite im wärmeaustauschenden Kontakt mit der Innenwand eines rohrförmigen Gehäuses. Die angestrebte gute Wärmeableitung führt jedoch bei Warmhalteplatten für Kaffeemaschinen zu Problemen, die später noch geschildert werden.

In ähnlicher Weise sind aus den US-A-3 720 807 (YOUN H. TING) und US-A-3 995 141 (VIEAU) elektrische Heizeinrichtungen zur Erwärmung von Speisen bekannt geworden, bei denen runde, scheibenförmige Elemente aus einem Widerstandsraterial mit positiven Temperaturkoeffizienten, also sogenannte PTC-Elemente an eine Platte angedrückt werden, welche aus einem thermisch und elektrisch sehr gut leitenden Material, z.B. Aluminium besteht. Die Platte liegt an der Unterseite einer Abstellfläche für das Gefäß mit der zu erwärmenden Speise an. Auch hier ergeben sich durch die unmittelbare metallische Wärmeübertragung ähnlich wie bei der zuvor beschriebenen lösung Probleme.

Weiterhin sind in der DE-A-2 743 880 und in den DE-GM 77 30 233 und 78 38 483 Anregungen enthalten, Heizeinrichtungen mit scheibenförmigen Heizelementen aus Kaltleiter-Material bei Haushalts-Kaffeemaschinen zu verwenden. In jedem Fall wird eine gute nach allen Seiten möglichst gleichmäßige Wärmeableitung von den Kaltleiterelementen angestrebt.

Es ist aus der FR-A-388 958 (L'ELECTRICITE MODERNE) und FR-A-887 132 (LABRUT) bei Einrichtungen zur Speisenerwärmung bekannt, zur Wärmespeicherung elektrische Heizspiralen und Rohrheizkörper in pulverförmiges Material, z.B. Barytsulfat oder Salz einzubetten.

Die Temperaturregelung bei elektrischen Heizeinrichtungen für Kaffeemaschinen verfolgt verschiedene Zwecke. Einerseits soll das aus einem Vorratsbehälter in ein Wasserdurchlaufrohr laufende Wasser so weit erhitzt werden, daß ein Dampfdruck entsteht, welcher das Wasser über ein Steigrohr zum Auslaufen auf das Kaffeepulver treibt. Andererseits soll das fertiggestellte Aufgußgetränk, z. B. der Kaffee, über einen längeren Zeitraum auch nach Verbrauch des Wassers aus dem Vorratsbehälter auf einer Filtrattemperatur von z. B. 80°C gehalten werden. Eine sehr wichtige Aufgabe besteht jedoch noch in der Vermeidung von Überhitzungen, die zu einem Brand des im allgemeinen aus Kunststoff bestehenden Gehäuses der Kaffeemaschine führen könnten.

Die genannten Überwachungs- und Steuerungsaufgaben werden bei den auf dem Markt befindlichen Kaffeemaschinen von üblichen Thermostaten mit Bimetallelementen oder dgl. durchgeführt.

PTC-Widerstandsmaterialien oder Kaltleiter wären an und für sich ideal geeignet, da sie mit zunehmender Erhitzung weniger Strom aufnehmen und dementsprechend sich selbst auf eine bestimmte Temperatur regulieren. Trotz der zahlreichen obengenannten Vorschläge ist jedoch bisher noch keine Kaffeemaschine mit serienmäßig eingebauten PTC-Widerstandselementen auf dem Markt. Die Gründe, weshalb sich die Vorschläge bisher nicht realisieren haben lassen, sind zahlreich. Die Wärmeleitung bei Widerstandsmaterialien mit positivem Temperaturkoeffizienten welche praktisch in Frage kommen, ist sehr schlecht. Sie beträgt bei reinem Bariumtitanat 0,03 Watt/cm je°C, ist also 400mal schlechter als Kupfer. Durch die Dotierung, z. B. mit Strontium, wird die Wärmeleitung noch ungünstiger. Weiterhin ergibt sich bei der praktischen Anwendung zwangsläufig ein einseitiger Wärmeabfluß mit einer ungleichmäßigen Wärmebelastung des PTC-Elementes, wodurch der Regelungsvorgang undefiniert wird. Durch die schlechte Wärmeleitung in Verbindung mit der ungleichmäßigen Belastung entstehen in dem PTC-Element Überhitzungszonen, die einen Umschlag von dem tetragonalen in das kubischflächenzentrierte Kristallgitter zur Folge haben. Die Fläche oder die Seite des PTC-Elementes, von welcher der Wärmefluß auf das zu erhitzende Material ausgeht, nimmt also eine andere Temperatur an als die Rückseite des Elementes, wodurch die Stromaufnahme der einzelnen Kristalle undefiniert wird und aufgrund innerer Spannungen entsprechende Schäden auftreten.

Der Erfindung liegt nun die Aufgabe zugrunde, eine elektrisch beheizbare Warmhalteplatte für Kaffeemaschinen der in Rede stehenden Art vorzuschlagen, bei der eine gleichmäßige Temperatur der PTC-Elemente über die Besamte Oberfläche Besichert ist und dementsprechend eine wesentlich bessere Funktionsweise der Temperaturüberwachung erreicht wird.

Die Lösung der gennanten Aufgabe ergibt sich aus den zeichnenden Merkmalen des unabhängigen Anspruch 1. Die abhängigen Ansprüche 2 bis 4 beschreiben bevorzugte Ausführungsformen der beheizbaren Warmhalteplatte für Kaffeemaschinen.

Der neuartige Funktionsmechanismus wird wie folgt begründet:

Bei den bisherigen Ausführungsformen wurde empfohlen, die Wärmeableitung von dem PTC-Element auf

2

den zu beheizenden Gegenstand so gut wie möglich zu Bestalten, indem z.B. elektrisch erforderliche Isolationen so dünn wie möglich, also folienartig ausgeführt werden, damit der Wärmefluß möglichst nicht behindert wird. Diese Überlegung ist an sich richtig, da ja bei mangeln dem Wärmeabfluß die Temperatur des PTC-Elementes ansteigt, dieses damit keinen oder nur wenig Strom aufnimmt und somit auch seine Wirkung als Heizelement einbüßt. Umgekehrt ist Ziel der Regelung die Temperatur des zu beheizenden Gegenstandes, z.B. des Kaffeefiltrates in der Kaffeekanne einer Kaffeemaschine. Nur durch gute Wärmeleitung zwischen dem Kaffee und dem PTC-Element erwartet man sich eine "Rückmeldung", d.h. einer bestimmten Temperatur des Kaffeefiltrates sollte auch eine bestimmte Temperatur des PTC-Elementes und damit eine bestimmte Stromaufnahme des PTC-Elementes entsprechen. Diese Überlegung ist jedoch nicht zu realisieren. Der Wärmeübergang von der Flüssigkeit auf das abgestellte Gefäß, von dort auf die Oberfläche der Warmhalteplatte und von dort auf das PTC-Element ist zu undefiniert, als daß z.B. eine exakte Filtrattemperatur von 80° C oder knapp darüber eingehalten werden könnte. Durch den mit Absicht besonders günstig gestalteten Wärmeübergang ergeben sich die eingangs erwähnten Temperaturunterschiede in dem PTC-Element, was im Endeffekt zur Zerstörung desselben führt.

Entsprechend der neuen Überlegung wird auf eine "Temperaturrückmeldung" der zu beheizenden Flüssigkeit verzichtet und insoweit das Wärmeleitungsproblem "entkoppelt". Die von dem PTC-Element oder von den PTC-Elementen erzeugte Wärme wird in guter Wärmeleitung auf eine Metallplatte geleitet, die vorzugsweise gleichzeitig der Stromzufuhr zu dem PTC-Element dient. Die Metallplatte ist in einem Material hoher Wärmekapazität, z.B. in Pulverförmigem Magnesiumoxid oder auch in Sand eingebettet. Die Größe der Metallplatte und die Menge des körnigen Materials läßt sich nun so abstimmen, daß:

a) die Temperaturdifferenz zwischen der an der Metallplatte angelöteten Seite des PTC-Elementes und der Rückseite eine bestimmte Größe nicht überschreitet und dementsprechend eine Zerstörung des PTC-Elementes vermieden wird,

b) das körnige Material nach und nach eine ganz bestimmte Temperatur, z.B. von 90° C annimmt,

c) die Höhe der Temperatur und die Temperaturverteilung in dem körnigen Material sich nur wenig ändert, unabhängig davon, ob z.B. eine Kaffeekanne mit mehr oder weniger oder mit kaltem oder mit heißem Kaffee abgestellt wird,

d) trotzdem aufgrund der hohen Wärmekapazität des körnigen Materials die erwünschte konstante Temperatur, z.B. des Kaffees, erreicht und aufrechterhalten wird.

Die Zeichnungen dienen der weiteren Erläuterung der Erfindung. Es zeigen:

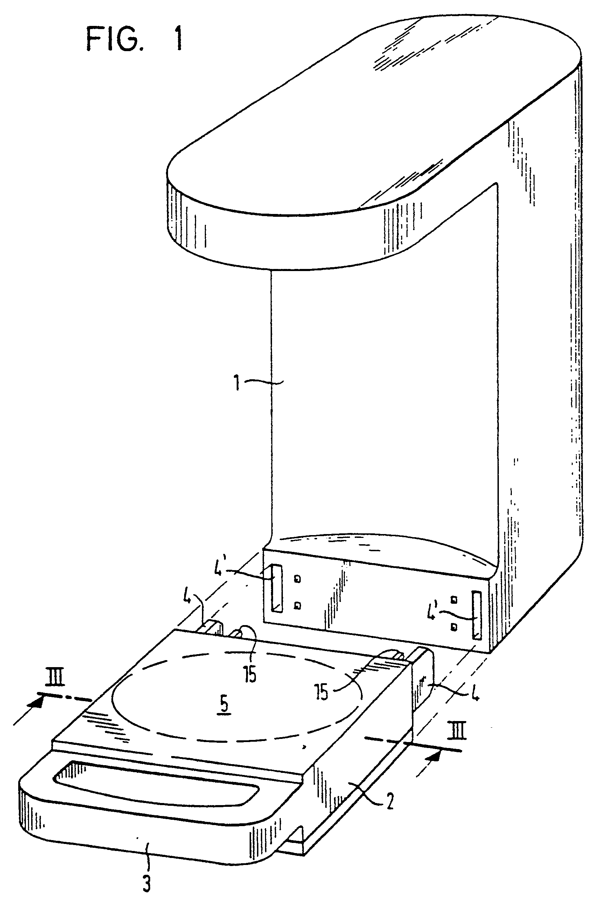

Fig. 1 schaubildlich eine Kaffeemaschine mit abgezogener Warmhalteplatte;

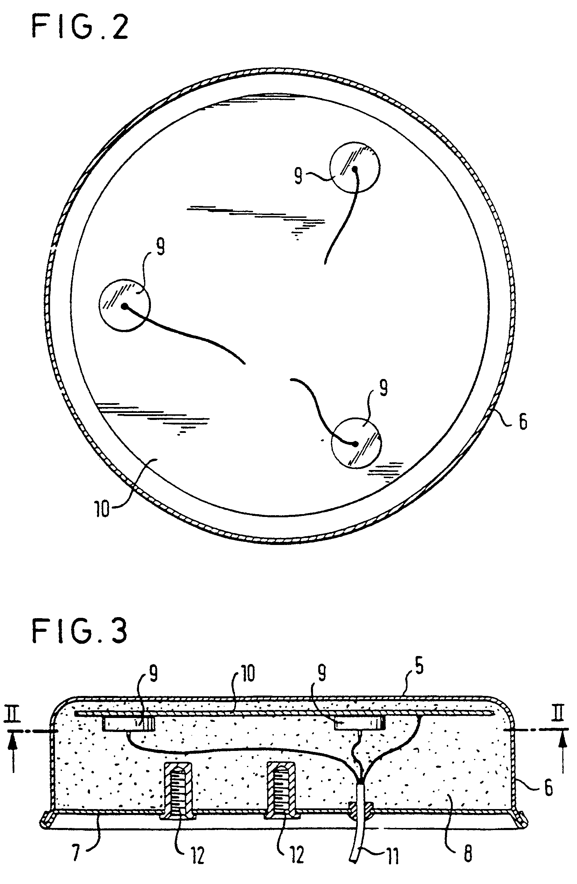

Fig. 2 eine Unteransicht der mit PTC-Elementen bestückten Heizeinrichtung entsprechend dem Schnitt II-II in Fig. 3;

Fig. 3 einen Schnitt längs der Linie III-III in Fig. 1.

Mit einer Kaffeemaschine 1 herkömmlicher Bauart ist eine Absteil- und Warmhalteeinrichtung 2 lösbar verbunden, die mittels des Handgriffes 3 aus der Steckverbindung 4, 4' gezogen werden kann. Die Abstell- und Warmhalteeinrichtung 2 besitzt eine Abstellfläche 5 für eine nicht dargestellte Kaffeekanne, welche von dem Boden einer Schale 6 aus Metall gebildet wird, die mittels eines Deckels 7, z.B. durch Umbördelung, verschlossen ist. Die Schale ist mit einem körnigen oder pulverförmigen Material 8 gefüllt, welches eine relativ hohe Wärmekapazität und einen guten elektrischen Isolationswiderstand hat. Bevorzugt werden Zirkonoxid, Magnesiumoxid oder auch Härtesaize, wie sie zum Härten von Stahl verwendet werden. In bestimmten Fällen kann auch einfacher Sand Verwendung finden.

In das körnige oder pulverförmige Material 8 ist im Abstand von der Abstellfläche 5 eine Heizeinrichtung eingebettet, die aus PTC-Elementen 9 besteht, welche auf eine Metallplatte 10 aufgelötet sind. Ein elektrisches Anschlußkabel ist einerseits mit der Metallplatte 10 und andererseits mit den Anschlüssen der PTC-Widerstandselemente 9 verbunden.

Das körnige Material 8 kann mittels der Sacklochgewindeschrauben 12 entsprechend zusammengepreßt werden. Diese dienen außerdem der Befestigung der Heizeinrichtung in der Abstell- und Warmhalteeinrichtung 2 sowie zur Befestigung weiterer Bauelemente. Das Anschlußkabel 11 kann mit elektrischen Steckern 15 verbunden sein, wenn die Steckverbindung 4 lediglich der mechanischen Halterung, jedoch nicht elektrischen Kontaktgabe dienen soll.

Durch die besondere Ausbildung und bei entsprechender Abstimmung ergeben sich im Aufheizvorgang jeweils genau definierte Verhältnisse, unabhängig davon, ob eine Kaffeekanne auf der Abstellfläche 5 abgestellt ist oder nicht, bzw. die Abweichungen halten sich in tolerierbaren Grenzen und zwar aufgrund der relativ hohen Wärmekapazität des pulverförmigen oder körnigen Materials 8. Die Grüße und Dicke der Metallplatte 10 muß so gewählt werden, daß einerseits eine großflächige Wärmeübertragung auf das körnige Material 8 gewährleistet ist. Andererseits soll die Temperaturdifferenz zwischen der der Metallplatte 10 zugewendeten Seite des PTC-Elementes und der Rückseite einen bestimmten Grenzwert nicht überschreiten.

3

Die PTC-Widerstandselemente 9 können mit normalen Widerstandselementen, d.h. solchen, die einen negativen Temperaturkoeffizienten haben, kombiniert werden, um besondere Charakteristiken des Temperaturverlaufes zu erzielen. Ein derartiges Element kann beispielsweise zwischen dem Deckel 7 und den PTC-Elementen 9 angeordnet sein oder es kann auch mit der Metallplatte 10 verlötet sein. Ein derartiges Element kann z.B. der schnelleren Aufheizung während der Kaffeezubereitung dienen. Nach Fertigstellung und dementsprechend Abschaltung des Wasserdurchlauferhitzers kann das Element abgeschaltet werden, so daß dann nur noch die PTC-Elemente 9 die Warmhaltefunktion für die abgestellte Kaffeekanne übernehmen.

**Patentansprüche**

1. Elektrisch beheizbare Warmhalteplatte für Kaffeemaschinen mit einem Gehäuse, dessen Oberfläche als Abstellfläche für ein warm zu haltendes Gefäß dient und das mit einem pulverförmigen oder körnigen Material gefüllt ist, welches eine hohe Wärmekapazität, einen hohen elektrischen Isolationswiderstand und eine schlechte Wärmeleitfähigkeit besitzt, dadurch gekennzeichnet, daß ein oder mehrere PTC-Widerstandselemente (9) auf eine Metallplatte (10) aufgelötet sind und daß die Metallplatte (10) mit Abstand von der unteren Fläche der Abstellfläche (5) so angeordnet ist, daß sie und die PTC-Widerstandselemente (9) von dem pulverförmigen oder körnigen Material (8) umgeben sind, wobei die Oberfläche der Metallplatte (10) mindestens zweimal so groß ist wie die Oberfläche jedes PTC-Widerstandselementes.

2. Warmhalteplatte nach Anspruch 1, dadurch gekennzeichnet, daß das pulverförmige oder körnige Material (8) Zirkonoxid, Magnesiumoxid, ein Härtesalz oder Sand ist.

3. Warmhalteplatte nach Ansprüchen 1 oder 2, dadurch gekennzeichnet, daß eine Steckverbindung (15) vorgesehen ist, mittels welcher die Warmhalteplatte (2) lösbar mit einer zugehörigen Kaffeemaschine (1) verbunden ist und daß elektrische Verbindungen von der Steckverbindung (15) einerseits zu der Metallplatte (10) und andererseits zu den Anschlüssen der PTC-Widerstandselemente (9) führen.

4. Warmhalteplatte nach Ansprüchen 1 bis 3, dadurch gekennzeichnet, daß die Metallplatte (10) aus Aluminium besteht.

**Claims**

1. An electrically heatable warming plate for coffee machines, including a housing, the surface of which serves as a setting-down area for a vessel to be kept warm and which is filled with a powdery or granular material having a high heat capacity, a high electric insulating resistance and a poor thermal conductivity, characterized in that one or a plurality of PTC resistance elements (9) are soldered onto a metal plate (10), and that the metal plate (10) is disposed with a spacing from the lower surface of the setting-down area in such manner that it and the PTC resistance elements (9) are surrounded by the powdery or granular material (8), wherein the surface of the metal plate (10) is at least twice as large as the surface of each PTC resistance element.

2. A warming plate according to claim 1, characterized in that the powdery or granular material (8) is zirconium oxide, magnesium oxide, a carburizing salt or sand.

3. A warming plate according to claims 1 or 2, characterized in that a plug connection (15) is provided, by means of which the warming plate (2) is detachably connected to an associated coffee machine (1), and that electrical connections lead from the plug connection (15) to the metal plate (10), on the one hand, and to the terminals of the PTC resistance elements (9), on the other hand.

4. A warming plate according to claims 1 to 3, characterized in that the metal plate (10) consists of aluminium.

**Revendications**

1. Plaque chauffante électrique pour machines à café comportant un corps dont la surface sert de support à un récipient à tenir chaud et qui est rempli d'une matière en poudre ou en grains qui a une forte capacité calorifique, une résistance d'isolement élevée et une mauvaise conductibilité thermique, caractérisé en ce qu'un ou plusieurs éléments formant résistance CTP (9) sont fixés par brasage sur une plaque métallique (10) et en ce que la plaque métallique (10) est disposée à une certaine distance de la face inférieure de la surface-support de récipient, de manière telle que la plaque métallique et les éléments formant résistance CTP (9) soient entourés par la matière en poudre ou en grains, la surface de la plaque métallique ( 10) étant au moins égale à deux fois la surface de chaque élément formant résistance CTP.

2. Plaque chauffante électrique selon la revendication 1, caractérisé en ce que la matière en poudre ou en grains (8) est de l'oxyde de zirconium, de la magnésie, un sel de trempe ou du sable.

3. Plaque chauffante électrique selon la revendication 1 ou 2, caractérisé en ce qu'il est prévu une liaison par connecteurs (15) au moyen de laquelle la plaque chauffante (2) est reliée de manière démontable à une machine à café (1) correspondante et en ce que des connexions électriques mènent de la liaison par connecteurs (15) à d'une part la plaque métallique (10) et d'autre part aux bornes des éléments formant résistances CTP (9).

4. Plaque chauffante électrique selon les revendications 1 à 3, caractérisé en ce que la plaque métallique (10) est en aluminium.

# FIG. 1

FIG.2

FIG.3